# EUROPÄISCHE PATENTSCHRIFT

(11) **EP 3 189 212 B1**
(45) Veröffentlichungstag und Bekanntmachung des Hinweises auf die Patenterteilung: **24.10.2018**
(21) Anmeldenummer: 15790162.0
(22) Anmeldetag: 05.11.2015
(51) Int. Cl.: F01D 5/08

(54) **GASTURBINENANLAGE**
GAS TURBINE PLANT
INSTALLATION DE TURBINE À GAZ

(30) Priorität: 18.11.2014 EP 14193696
(43) Veröffentlichungstag der Anmeldung: 12.07.2017
(73) Patentinhaber: Siemens Aktiengesellschaft, 80333 München (DE)
(72) Erfinder: HELMERS, Lennard, 45481 Mülheim a.d. Ruhr (DE)
(86) Internationale Anmeldenummer: PCT/EP2015/075844
(87) Internationale Veröffentlichungsnummer: WO 2016/078927

(56) Entgegenhaltungen:
- DE-A1-102012 011 294
- DE-T2- 69 715 393
- US-A- 5 611 197

## Beschreibung

Die vorliegende Erfindung betrifft eine Gasturbinenanlage. Insbesondere betrifft die Erfindung eine Gasturbinenanlage mit einem Kühlsystem zum Kühlen von Komponenten der Gasturbinenanlage, die während des Betriebs der Gasturbinenanlage hohen Temperaturen ausgesetzt sind.

Gasturbinenkomponenten, die während des Betriebs einer Gasturbinenanlage hohen Temperaturen ausgesetzt sind, sind bspw. die Leit- und Laufschaufeln der Turbine, den Heißgaspfad durch die Turbine begrenzende Wandabschnitte des Turbinengehäuses sowie den Heißgaspfad durch die Turbine begrenzende Abschnitte des Rotors. Um die Widerstandsfähigkeit Komponenten gegen hohe Temperaturen zu erhöhen, werden diese in der Regel mit einem keramischen Wärmedämmbeschichtungssystem versehen, welches häufig aus einer keramischen Wärmedämmschicht und einer darunter liegenden Haftvermittlerschicht aufgebaut ist, wobei die Haftvermittlerschicht auch zur Korrosions- und/oder Oxidationshemmung dient. Durch derartige Wärmedämmbeschichtungssysteme kann die Temperatur im Basismaterial der Turbinenkomponenten gegenüber der Temperatur an der Oberfläche des Beschichtungssystems verringert werden. Um zu noch höheren Betriebstemperaturen der Gasturbinenanlage gelangen zu können, wird zudem Wärme aus thermisch besonders belasteten Bauteilen abgeführt, in dem sie mit Kühlluft durchströmt werden.

Verfahren zur Kühlung einer Gasturbine sind etwa aus der DE 102012011294 A1 oder der US 5,611,197 bekannt, welche beide dazu anleiten, Verdichterluft über einen Kühlluftpfad thermisch stark beanspruchten Bauteilen in dem Turbinenabschnitt zuzuführen. Die Kühlluft wird nach der Beaufschlagung der Bauteile in dem Turbinenabschnitt anschließend wieder in eine Rückführleitung eingeströmt, um erneut dem Strömungspfad im Verdichterabschnitt zugeführt zu werden. Die Zuführung in den Strömungspfad erfolgt hierbei an einer Stelle, welche stromauf derjenigen Stelle angeordnet ist, an welcher die Verdichterluft ursprünglich entnommen wurde.

Aber auch nicht unmittelbar mit dem heißen Arbeitsmedium im Strömungspfad der Gasturbine in Kontakt kommende Komponenten der Gasturbinenanlage wie bspw. Rotorabschnitte, die sich im Brennerabschnitt der Gasturbinenanlage befinden, sind im Betrieb der Gasturbinenanlage hohen Temperaturen ausgesetzt. Auch solche Komponenten werden häufig mit Kühlluft gekühlt. Die für die Kühlung der Gasturbinenkomponenten nötige Luft wird an Anzapfstellen im Verdichter der Gasturbinenanlage der Verdichterluft entnommen. Nach dem Kühlen der zu kühlenden Gasturbinenkomponente wird die Kühlluft dem Arbeitsmedium im Heißgaspfad zugeführt.

Das Abführen der verbrauchten Kühlluft in den Heißgaspfad bzw. in den Strömungspfad der Gasturbinenanlage beeinflusst jedoch die Aerodynamik im Heißgaspfad bzw. in dem Strömungspfad sowie die Effizienz der Gasturbinenanlage. Dies gilt im besonderen Maße, wenn wie heutzutage nicht unüblich verbrauchte Kühlluft an mehreren Stellen in den durch die Gasturbinenanlage führenden Strömungspfad entlassen wird.

Es ist daher Aufgabe der vorliegenden Erfindung, eine Gasturbinenanlage zu schaffen, bei dem die Anzahl der Stellen, an denen Kühlluft in den Strömungspfad der Gasturbinenanlage entlassen wird, verringert ist.

Die genannte Aufgabe wird durch eine Gasturbinenanlage nach Anspruch 1 gelöst. Die abhängigen Ansprüche enthalten vorteilhafte Ausgestaltungen der Erfindung.

Eine erfindungsgemäße Gasturbinenanlage ist mit einem Verdichterabschnitt, einem wenigstens eine Brennkammer enthaltenden Brennkammerabschnitt und einem Turbinenabschnitt ausgestattet, wobei sich ein Strömungspfad von einem Verdichtereingang ausgehend durch den Verdichterabschnitt, wenigstens eine Brennkammer des Brennkammerabschnitts und den Turbinenabschnitt zu einem Turbinenausgang erstreckt. Außerdem ist sie mit wenigstens einem ersten und einem zweiten Kühlluftpfad ausgestattet, die die wenigstens eine Brennkammer umgehen, wobei der erste Kühlluftpfad stromauf der wenigstens einen Brennkammer Luft aus dem Strömungspfad abzapft. Die Kühlluftpfade führen abgezapfte Verdichterluft als Kühlluft durch bzw. an Turbinenkomponenten im Turbinenabschnitt und/oder im Brennkammerabschnitt hindurch oder entlang, wobei der erste Kühlluftpfad ein höheres Druckniveau als der zweite Kühlluftpfad aufweist und die Kühlluft nach dem Kühlen der vom ersten Kühlluftpfad zu kühlenden Gasturbinenkomponenten an einer Einspeisestelle in den zweiten Kühlluftpfad einspeist.

In der erfindungsgemäßen Gasturbinenanlage weist der zweite Kühlluftpfad eine Abzapfstlle im Verdichterabschnitt auf und erstreckt sich unter Umgehung der wenigstens einen Brennkammer vom Verdichterabschnitt zum Turbinenabschnitt, wobei der zweite Kühlluftpfad im Verdichterabschnitt Luft aus dem Strömungspfad abzapft und als Kühlluft durch bzw. an Turbinenkomponenten im Turbinenabschnitt und/oder im Brennkammerabschnitt hindurch oder entlang führt. Der erste Kühlluftpfad speist dann die Kühlluft nach dem Kühlen der vom ersten Kühlluftpfad zu kühlenden Gasturbinenkomponenten an einer Einspeisestelle als zu der aus dem Strömungspfad im Verdichterabschnitt abgezapften Luft des zweiten Kühlluftpfades zusätzliche Kühlluft in den zweiten Kühlluftpfad ein. Die Kühlluft aus dem ersten Kühlluftpfad kann dann zusammen mit der Kühlluft im zweiten Kühlluftpfad die vom zweiten Kühlluftpfad zu kühlenden Turbinenkomponente kühlen. Da der erste Kühlluftpfad die Kühlluft nicht in den Strömungspfad der Gasturbinenanlage abgibt, kann der erste Kühlluftpfad als ein geschlossener Kühlluftpfad angesehen werden.

Die zu kühlenden Gasturbinenkomponenten können insbesondere Lauf- und/oder Leitschaufeln der Turbine, Wandabschnitte des Gasturbinengehäuses, Abschnitte der Rotorwelle, etc. sein.

In der erfindungsgemäßen Gasturbinenanlage wird also die im ersten Kühlluftpfad befindliche Kühlluft nach dem Kühlen der jeweiligen Gasturbinenkomponenten nicht in dem Strömungspfad der Gasturbinenanlage entlassen, sondern dem zweiten Kühlluftpfad, welcher ein niedriges Durchniveau als der erste Kühlluftpfad aufweist, zugeführt, so dass wenigstens ein geschlossener erster Kühlluftpfad entsteht. Mit Hilfe der erfindungsgemäßen Ausgestaltung der Gasturbinenanlage kann die Anzahl an Stellen, an denen Kühlluft aus einem Kühlluftpfad in den Strömungspfad durch die Gasturbinenanlage entlassen wird, verringert werden.

Grundsätzlich besteht die Möglichkeit, die Kühlluft aus dem zweiten Kühlluftpfad nach dem Kühlen der vom zweiten Kühlluftpfad zu kühlenden Gasturbinenkomponenten in einen dritten Kühlluftpfad abzugeben, so dass auch der zweite Kühlluftpfad als eingeschlossener Kühlluftpfad angesehen werden kann. Lediglich die den letzten Kühlluftpfad durchströmende Kühlluft, von der wenigstens ein Teil zuvor den ersten und/oder den zweiten Kühlluftpfad und/oder weitere Kühlluftpfade durchströmt hat, wird schließlich in den Strömungspfad der Gasturbinenanlage abgegeben.

Die Einspeisestelle im zweiten Kühlluftpfad an dem die Kühlluft aus dem ersten Kühlluftpfad nach Kühlen der entsprechenden Gasturbinenkomponenten in den zweiten Kühlluftpfad abgegeben wird, kann insbesondere in einem Verdichterabschnitt befindlichen Teil des zweiten Kühlluftpfades und dort stromab der Abzapfstelle des zweiten Kühlluftpfades angeordnet sein. In einer speziellen Ausgestaltung der Gasturbinenanlage kann der erste Kühlluftpfad dann beispielsweise nacheinander durch einen Spalt zwischen dem Rotor und einer den Rotor im Brennkammerabschnitt umgebenen Rotorabdeckung und durch eine abschließende Leitschaufelreihe des Verdichterabschnitts hindurch zur Einspeisestelle in den zweiten Kühlluftpfad führen. Optional kann der erste Kühlluftpfad auch durch die Leitschaufeln der führenden Leitschaufelreihe der Turbine führen. Die spezielle Ausgestaltung ermöglicht insbesondere eine Kühlung des Rotors im Bereich des Brennkammerabschnittes, ohne dass die zur Kühlung verwendete Kühlluft im Verdichterabschnitt in den Strömungspfad der Gasturbinenanlage entlassen werden muss. Das Entlassen verbrauchter Kühlluft in den Strömungspfad im Verdichterabschnitt der Gasturbinenanlage ist besonders kritisch, da die Aerodynamik im Verdichter besonders empfindlich auf Injektionen von Luft in den Strömungspfad reagiert. Durch die erfindungsgemäße Ausgestaltung kann die Injektion der Luft in den Strömungspfad im Verdichter vermieden werden, so dass die damit verbundenen Nachteile nicht auftreten.

Alternativ zur Lage der Einspeisestelle in einem im Verdichterabschnitt befindlichen Teil des zweiten Kühlluftpfades besteht auch die Möglichkeit, die Einspeisestelle in einem im Turbinenabschnitt befindlichen Teil des zweiten Kühlluftpfades stromauf der vom zweiten Kühlluftpfad zu kühlenden Gasturbinenkomponenten anzuordnen. Dies ist insbesondere dann sinnvoll, wenn eine Rotorkühlung im Brennkammerabschnitt nicht benötigt wird.

Wie weiter oben bereits angedeutet, kann in der erfindungsgemäßen Gasturbinenanlage eine Mehrzahl von Kühlluftpfaden vorhanden sein, wobei die Kühlluftpfade unterschiedliche Durchniveaus aufweisen. Die Kühlluft der Kühlluftpfade wird dann nach dem Kühlen der von den Kühlluftpfaden zu kühlenden Gasturbinenkomponenten an Einspeisestellen jeweils in den Kühlluftpfand mit dem nächstniedrigeren Druckniveau eingespeist. Auf diese Weise kann eine Kaskade von Kühlluftpfaden realisiert werden, deren Druckniveaus nacheinander abnehmen, so dass lediglich die Kühlluft des letzten Kühlluftpfades in den Strömungspfad durch die Gasturbinenanlage entlassen werden muss. Auf diese Weise kann die Zahl der Stellen, an denen Kühlluft in den Strömungspfad der Gasturbinenanlage entlassen wird, auf ein Minimum reduziert werden.

Ein Kühlluftpfad der erfindungsgemäßen Gasturbinenanlage kann insbesondere derart ausgestaltet sein, dass er sich durch die Leitschaufeln einer bestimmten Leitschaufelreihe der Turbine erstreckt und in einen anderen Kühlluftpfad mündet, der sich durch die Leitschaufeln einer im Strömungspfad stromab zu der bestimmten Leitschaufelreihe gelegenen weiteren Leitschaufelreihe erstreckt. Auf diese Weise kann ein Kühlluftpfad für die Leitschaufeln bereit gestellt werden, der bis zum Kühlluftpfad für die letzte zu kühlende Leitschaufelreihe als geschlossener Kühlluftpfad ausgebildet ist.

Weitere Merkmale, Eigenschaften und Vorteile der vorliegenden Erfindung, ergeben sich aus der nachfolgenden Beschreibung von Ausführungsbeispielen unter Bezugnahme auf die beiliegenden Figuren.
Figur 1 zeigt beispielhaft eine Gasturbinenanlage in einem Längsteilschnitt.
Figur 2 zeigt ein erstes Ausführungsbeispiel für einen Kühlluftpfad in einer erfindungsgemäßen Gasturbinenanlage.
Figur 3 zeigt ein zweites Ausführungsbeispiel für einen Kühlluftpfad in einer erfindungsgemäßen Gasturbinenanlage.

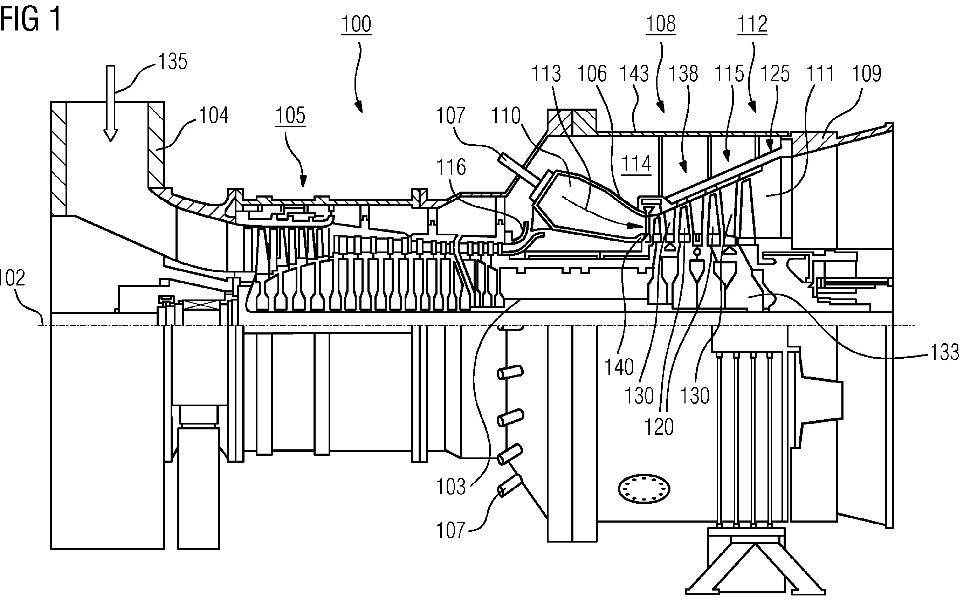

Die Figur 1 zeigt als Beispiel für eine Gasturbinenanlage, in der die vorliegende Erfindung zur Anwendung kommen kann, eine stationäre Gasturbinenanlage 100 in einem Längsteilschnitt.

Die Gasturbinenanlage 100 weist im Inneren einen um eine Rotationsachse 102 drehgelagerten Rotor 103 mit einer Welle 101 auf, der auch als Turbinenläufer bezeichnet wird.

Entlang des Rotors 103 folgen aufeinander ein Ansauggehäuse 104, ein Verdichter 105, eine beispielsweise torusartige Brennkammer 110, insbesondere eine Ringbrennkammer, mit mehreren koaxial angeordneten Brennern 107, eine Turbine 108 und das Abgasgehäuse 109. Statt einer Ringbrennkammer 110 können aber auch eine Anzahl von ringförmig um den Rotor 103 herum angeordneten mehr oder weniger zylinderförmigen Brennkammern vorhanden sein. Der Abschnitt der Gasturbinenanlage 100, in dem sich die Brennkammer 110 befindet, wird nachfolgend Brennkammerabschnitt 106 genannt.

Die Ringbrennkammer 110 kommuniziert mit einem beispielsweise ringförmigen Heißgaskanal 111. Dort bilden beispielsweise vier hintereinander geschaltete Turbinenstufen 112 die Turbine 108. Jede Turbinenstufe 112 ist beispielsweise aus zwei Schaufelringen gebildet. In Strömungsrichtung eines Arbeitsmediums 113 gesehen folgt im Heißgaskanal 111 einer Leitschaufelreihe 115 eine aus Laufschaufeln 120 gebildete Reihe 125. Die Leitschaufeln 130 sind dabei an einem Innengehäuse 138 eines Stators 143 befestigt, wohingegen die Laufschaufeln 120 einer Reihe 125 beispielsweise mittels einer Turbinenscheibe 133 am Rotor 103 angebracht sind.

An dem Rotor 103 angekoppelt ist ein Generator oder eine Arbeitsmaschine (nicht dargestellt).

Während des Betriebes der Gasturbine 100 wird vom Verdichter 105 durch das Ansauggehäuse 104 Luft 135 angesaugt und verdichtet. Die am turbinenseitigen Ende des Verdichters 105 bereitgestellte verdichtete Luft wird zu den Brennern 107 geführt und dort mit einem Brennmittel vermischt. Das Gemisch wird dann unter Bildung des Arbeitsmediums 113 in der Brennkammer 110 verbrannt. Von dort aus strömt das Arbeitsmedium 113 entlang des Heißgaskanals 111 vorbei an den Leitschaufeln 130 und den Laufschaufeln 120. An den Laufschaufeln 120 entspannt sich das Arbeitsmedium 113 impulsübertragend, so dass die Laufschaufeln 120 den Rotor 103 antreiben und dieser die an ihn angekoppelte Arbeitsmaschine. Der Verdichter 105, die Brennkammer 110 und die Turbine 108 werden also von einem Strömungspfad durchsetzt, der zum Erzeugen und Breitstellen des Arbeitsmediums der Turbine dient.

Die dem heißen Arbeitsmedium 113 ausgesetzten Bauteile unterliegen während des Betriebes der Gasturbine 100 thermischen Belastungen. Die Leitschaufeln 130 und Laufschaufeln 120 der in Strömungsrichtung des Arbeitsmediums 113 gesehen ersten Turbinenstufe 112 werden neben den die Ringbrennkammer 110 auskleidenden Hitzeschildelementen am meisten thermisch belastet. Um den dort herrschenden Temperaturen standzuhalten, werden diese mittels Kühlluft gekühlt. Ebenso werden Auskleidungen des Heißgaskanals 111 und/oder der Rotor 103 im Bereich des Brennkammerabschnitts, also in demjenigen Abschnitt der Gasturbinenanlage, in dem sich die Ringbrennkammer 110 oder die Anzahl von im Wesentlichen zylinderförmigen Brennkammern befindet bzw. befinden, gekühlt.

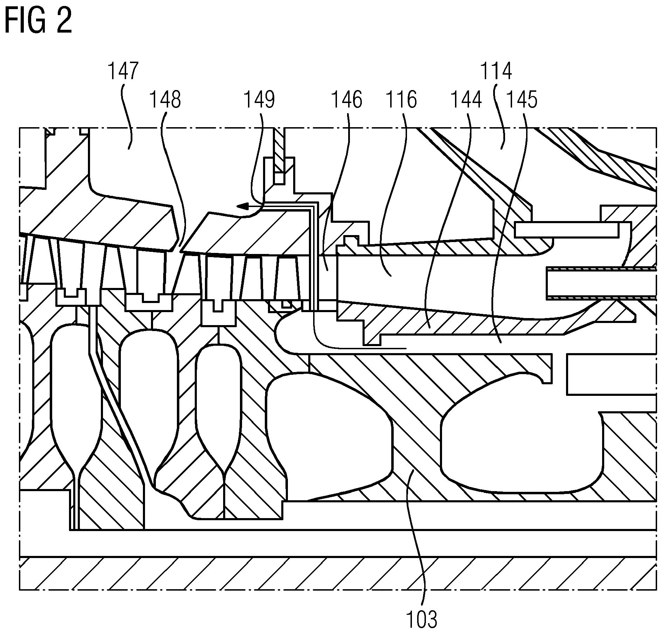

Erster Kühlluftpfad der Gasturbinenanlage 100 wird nachfolgend mit Bezug auf die Figur 2 näher erläutert. Dieser Kühlluftpfad erstreckt sich vom Verdichterausgang 116 durch ein Brennkammerplenum 114, durch die erste Leitschaufelreihe 130, also durch die im Turbinenabschnitt 108 auf die Brennkammer 110 als erste folgende Leitschaufelreihe 130, und durch einen im Bereich des Brennkammerabschnitts 106 zwischen dem Rotor 103 und einer stationären Rotorabdeckung 144 gebildeten Ringspalt 145 und schließlich durch die Leitschaufeln 146 der letzten Leitschaufelreihe des Verdichters 105. Von dort wird die Kühlluft des ersten Kühlluftpfades in ein Plenum 147 eingespeist, das Teil eines zweiten Kühlluftpfades ist und das über eine stromauf des Verdichterausgangs 116 gelegene Abzapfstelle 148 mit Verdichterluft versorgt wird. Die Einspeisestelle, an der die Verdichterluft aus dem ersten Kühlluftpfad in das Plenum 147 des zweiten Kühlluftpfades eingespeist wird, befindet sich im zweiten Kühlluftpfad stromauf der Abzapfstelle 148. Es sei an dieser Stelle darauf hingewiesen, dass die Abzapfstelle für die Verdichterluft für den ersten Kühlluftpfad durch den Verdichterausgang 116 gebildet ist. Wenn mittels des ersten Kühlluftpfades lediglich eine Rotorkühlung erfolgen soll, kann die Kühlluft vom Plenum 114 aus direkt zu dem zwischen dem Rotor 103 und der stationären Rotorabdeckung 144 gebildeten Ringspalt 145 geführt werden, ohne dass sie zuvor durch die erste Leitschaufelreihe 130 geführt wird.

Da die Abzapfstelle 148 des zweiten Kühlluftpfades im Verdichterabschnitt stromauf des Verdichterausgangs 116 liegt, ist das Druckniveau an der Abzapfstelle 148 des zweiten Kühlluftpfades geringer als das Druckniveau im ersten Kühlluftpfad, welches durch den Druck am Verdichterausgang 116 bestimmt ist. Ein Zuführen der Kühlluft des ersten Kühlluftpfades in den zweiten Kühlluftpfad ist daher wegen der Druckdifferenz zwischen den beiden Kühlluftpfades ohne weiteres möglich. Zudem ist der Massestrom im ersten Kühlluftpfad etwa um einen Faktor 3-4 geringer als der im zweiten Kühlluftpfad benötigte Massenstrom. Dies resultiert daher, dass die Anzahl und die Größe der zu kühlenden Leitschaufeln in der ersten Leitschaufelreihe geringer sind als die Anzahl und die Größe der Leitschaufeln in der zweiten Leitschaufelreihe, so dass der für die Kühlung der ersten Leitschaufelreihe benötigte Massenfluss geringer ist als der zur Kühlung der zweiten Leitschaufelreihe benötigte Massenfluss. Selbst wenn die Temperatur der vom ersten Kühlluftpfad in den zweiten Kühlluftpfad entlassenden Kühlluft über der Temperatur der aus dem Verdichter abgezapften Kühlluft für den zweiten Kühlluftpfad liegt, ist damit aufgrund des deutlich geringeren Masseflusses an Kühlluft des ersten Kühlluftpfades im Vergleich zu dem für den zweiten Kühlluftpfad aus dem Kompressor abgezapften Luftmassenstrom nur eine geringfügige Temperaturerhöhung in der Kühlluft des zweiten Kühlluftpfades die Folge, welche für die vom zweiten Kühlluftpfad zu erfüllende Kühlfunktion (insbesondere Kühlung der Leitschaufeln der zweiten Leitschaufelreihe) unkritisch ist. Durch die Zufuhr der Kühlluft des zweiten Kühlluftpfades in das Plenum 147 des zweiten Kühlluftpfades kann dagegen die schwer zu handhabende Zufuhr verbrauchter Kühlluft aus dem ersten Kühlluftpfad in den Strömungspfad des Verdichters vermieden werden. Eine derartige Zufuhr der verbrauchten Kühlluft des ersten Kühlluftpfades in den Strömungspfad durch den Verdichter wäre insofern kritisch, als dass die Aerodynamik im Strömungspfad durch den Verdichter sehr empfindlich auf Störungen reagiert und daher komplexe Anforderungen an den Mechanismus zur Abgabe der Kühlluft des ersten Kühlluftpfades in den Strömungspfad des Verdichters zu erfüllen wären. Die Anforderungen für die Abgabe der Kühlluft des ersten Kühlluftpfades in den zweiten Kühlluftpfad sind dagegen weniger komplex und daher leichter zu erfüllen. Wenn es die Temperatur- und Massenstromverhältnisse im ersten und im zweiten Kühlluftpfad zulassen, kann die Abzapfstelle 148 des zweiten Kühlluftpfades auch geschlossen werden, so dass der zweite Kühlluftpfad alleine vom ersten Kühlluftpfad mit Kühlluft versorgt wird.

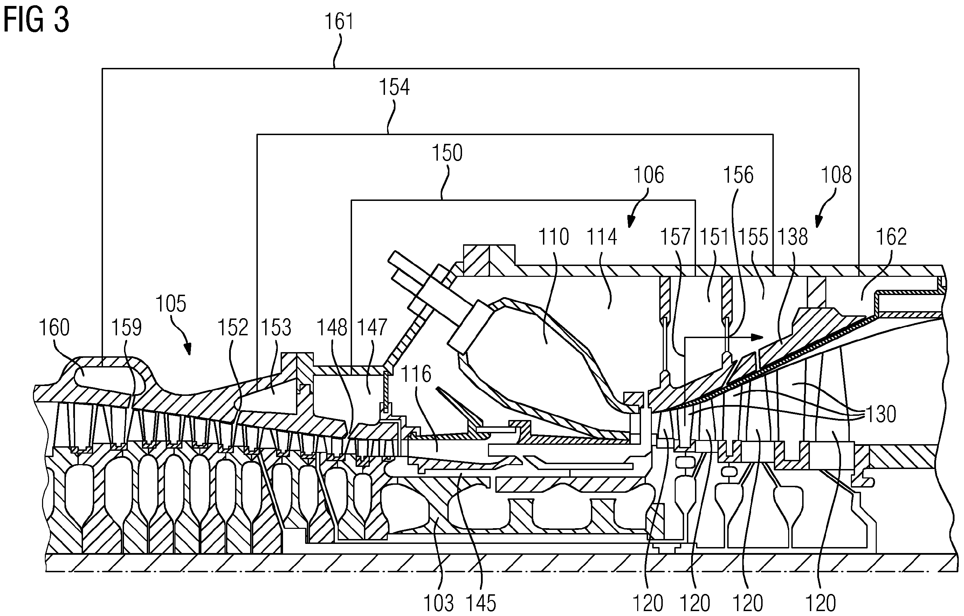

Ein zweites Ausführungsbeispiel für einen ersten und einen zweiten Kühlluftpfad in einer erfindungsgemäßen Gasturbinenanlage ist in Fig. 3 dargestellt. In diesem entspricht der erste Kühlluftpfad dem zweiten Kühlluftpfad aus dem ersten Ausführungsbeispiel. Er führt vom Abzapfpunkt 148, durch das Plenum 147 im Verdichter und eine Bypassleitung 150, die den Brennkammerabschnitt 106 umgeht, in ein Plenum 151 im Turbinenabschnitt 108 und von dort zu den Leitschaufeln 130 der zweiten Leitschaufelreihe des Turbinenabschnitts 108. Nach dem Durchströmen der Leitschaufeln wird die Kühlluft dieses Kühlluftpfades in einen zweiten Kühlluftpfad abgegeben, der zur Kühlung der Leitschaufeln 130 der dritten Leitschaufelreihe dient.

Der zweite Kühlluftpfad weist im Verdichter 105 eine Abzapfstelle 152 auf, die stromauf der Abzapfstelle 148 des ersten Kühlluftpfades angeordnet ist. Das Druckniveau des zweiten Kühlluftpfades ist dementsprechend geringer als das Druckniveau des ersten Kühlluftpfades. Von der Abzapfstelle 152 verläuft der zweite Kühlluftpfad durch ein im Verdichter 105 angeordnetes Plenum 153, eine Bypassleitung 154, mit der der Brennkammerabschnitt 106 der Gasturbinenanlage umgangen wird, und ein Plenum 151 im Turbinenabschnitt 108 zur dritten Leitschaufelreihe und ggf. zu einem den Strömungspfad durch die Turbine begrenzenden Wandabschnitt des Innengehäuses 138 der Turbine 108.

Die Abfuhr der Kühlluft aus dem ersten Kühlluftpfad in den zweiten Kühlluftpfad erfolgt im vorliegenden Ausführungsbeispiel durch Leitungen, die von den Leitschaufeln 130 der ersten Leitschaufelreihe ausgehend durch das im Turbinenabschnitt 108 gelegene Plenum 151 des ersten Kühlluftpfades hindurch zu einer Einspeisestelle 156 im zweiten Kühlluftpfad führen. Die Leitungen sind im vorliegenden Ausführungsbeispiel durch den Pfeil 157 angedeutet. Die Einspeisestelle 156 im zweiten Kühlluftpfad befindet sich im Plenum 155 stromauf der zu kühlenden Turbinenschaufelreihe und der ggf. zu kühlenden Wandelemente des Innengehäuses 138.

Obwohl im vorliegenden Ausführungsbeispiel die Kühlluft des ersten Kühlluftpfades nach dem Durchströmen der Leitschaufeln, der zweiten Leitschaufelreihe mittels durch das im Turbinenabschnitt 108 gelegene Plenum 101 des ersten Kühlluftpfades hindurch geführter Leitungen zur Einspeisestelle im zweiten Kühlluftpfad geführt wird, besteht auch die Möglichkeit, die Kühlluft durch Leitungen zu führen, die durch den zwischen den Plenen 151, 155 und den Leitschaufeln 130 gelegenen Wandabschnitt des Innengehäuses 138 verlaufen.

Im vorliegenden Ausführungsbeispiel wird die Kühlluft des zweiten Kühlluftpfades nach dem Kühlen der Leitschaufeln 130 der dritten Leitschaufelreihe in den Strömungspfad der Turbine abgegeben. Alternativ besteht aber auch die Möglichkeit, die Kühlluft nach dem Kühlen der Leitschaufeln 130 der dritten Leitschaufelreihe statt in den Strömungspfad der Turbine in einen weiteren Kühlluftpfad abzugeben. Dieser weitere Kühlluftpfad ist in Figur 3 als dritter Kühlluftpfad dargestellt, der von einer stromauf der Abzapfstelle 152 des zweiten Kühlluftpfades gelegenen Abzapfstelle 159 durch ein im Verdichter 105 befindliches Plenum 160, eine den Brennkammerabschnitt 106 umgehende Byspassleitung 161 und ein Plenum 162 im Turbinenabschnitt 8 zu den Leitschaufeln 130 der vierten Leitschaufelreihe und ggf. zu den Strömungspfad durch die Gasturbine begrenzenden Wandelementen des Innengehäuses 138 führt. Nach dem Durchströmen der Leitschaufeln 130 der vierten Leitschaufelreihe und ggf. der Wandelemente erfolgt dann eine Abgabe der Kühlluft nach Außerhalb der Gasturbinenanlage oder in den Strömungspfad im Abgasgehäuse 109 der Gasturbinenanlage.

Wie beim Abgeben der Kühlluft des ersten Kühlluftpfades in den zweiten Kühlluftpfad kann beim Abgeben der Kühlluft des zweiten Kühlluftpfades in den dritten Kühlluftpfad die Kühlluft durch Leitungen, die durch das im Turbinenabschnitt 108 gelegene Plenum 155 des zweiten Kühlluftpfades hindurch führen, zu dem im Turbinenabschnitt 108 gelegenen Plenum 162 des dritten Kühlluftpfades geführt werden. Alternativ können die Leitungen durch einen Wandabschnitt des Innengehäuses 138 geführt sein.

Obwohl mit Bezug auf das zweite Ausführungsbeispiel der erste Kühlluftpfad des ersten Ausführungsbeispiels nicht beschrieben ist, erkennt der Fachmann, dass er den ersten Kühlluftpfad aus dem ersten Ausführungsbeispiel auch im zweiten Ausführungsbeispiel realisieren kann. Dieser würde dann dem ersten Kühlluftpfad des zweiten Ausführungsbeispiels vorgelagert sein, so dass dann bis zu vier Kühlluftpfade sequenziell hintereinander geschaltet sind, wobei die von einem Kühlluftpfad verbrauchte Kühlluft in den Kühlluftpfad mit dem nächstniedrigeren Druckniveau abgegeben wird. Dabei macht man sich zu Nutze, dass die Kühlluftpfade aufgrund ihrer unterschiedlichen Abzapfstellen im Verdichter unterschiedliche Druckniveaus aufweisen, wobei das höchste Druckniveau im ersten Kühlluftpfad des ersten Ausführungsbeispiels verwirklich ist, das dann nächst niedrigere Druckniveau im ersten Kühlluftpfad des zweiten Ausführungsbeispiels (der dem zweiten Kühlluftpfad des ersten Ausführungsbeispiels entspricht), das nächst niedrigere Druckniveau im zweiten Kühlluftpfad des zweiten Ausführungsbeispiels und das niedrigste Druckniveau im dritten Kühlluftpfad des zweiten Ausführungsbeispiels. Zudem sind die Massenströme der Kühlluftpfade ebenfalls unterschiedlich, wobei die Massenströme umso niedriger sind, je höher das Druckniveau des entsprechenden Kühlluftpfades ist. Der niedrigste Massenstrom liegt daher beim ersten Kühlluftpfad des ersten Ausführungsbeispiels vor, der höchste Massenstrom beim dritten Kühlluftpfad des dritten Ausführungsbeispiels. Daher sind die Beeinflussungen der Kühlluftpfade durch das Abgeben der Kühlluft in einen Kühlluftpfad mit niedrigem Druckniveau relativ unkritisch im Hinblick auf die Aerodynamik und die Thermodynamik im aufnehmenden Kühlluftpfad.

Die vorliegende Erfindung wurde zu Erläuterungszwecken anhand von Ausführungsbeispielen näher erläutert. Wie bereits aus der Beschreibung der Ausführungsbeispiele hervorgeht, sind Abwandlungen der Ausführungsbeispiele möglich. Insbesondere können die Abzapfstellen des zweiten Kühlluftpfades und/oder des dritten Kühlluftpfades und/oder des vierten Kühlluftpfades geschlossen werden, wenn die Temperatur- und Massenstromverhältnisse in den einzelnen Kühlluftpfaden dies zulassen, so dass zwei oder mehr Kühlluftpfade, oder gar alle Kühlluftpfade, lediglich von der vom ersten Kühlluftpfad aus dem Strömungspfad der Gasturbinenanlage abgezapften Kühlluft gespeist werden. Die Erfindung soll daher nicht durch die Ausführungsbeispiele begrenzt sein, sondern durch die beigefügten Ansprüche.

## Patentansprüche

1. Gasturbinenanlage (100) mit einem Verdichterabschnitt (105), einem wenigstens eine Brennkammer (110) enthaltenden Brennkammerabschnitt (106) und einem Turbinenabschnitt (108), wobei sich ein Strömungspfad von einem Verdichtereingang ausgehend durch den Verdichterabschnitt (105), wenigstens eine Brennkammer (110) des Brennkammerabschnitts (106) und den Turbinenabschnitt (108) zu einem Turbinenausgang erstreckt, und mit wenigstens einem ersten und einem zweiten Kühlluftpfad, die die wenigstens eine Brennkammer (110) umgehen, wobei der erste Kühlluftpfad stromauf der wenigstens einen Brennkammer (110) Verdichterluft aus dem Strömungspfad abzapft, und wobei die Kühlluftpfade abgezapfte Verdichterluft als Kühlluft durch bzw. an Turbinenkomponenten im Turbinenabschnitt (108) und/oder im Brennkammerabschnitt hindurch oder entlang führen, wobei der erste Kühlluftpfad ein höheres Druckniveau als der zweite Kühlluftpfad aufweist und die Kühlluft nach dem Kühlen der vom ersten Kühlluftpfad zu kühlenden Gasturbinenkomponenten an einer Einspeisestelle (149, 156) in den zweiten Kühlluftpfad einspeist, wobei der zweite Kühlluftpfad eine Abzapfstelle (148, 152, 159) im Verdichterabschnitt (105) aufweist und sich vom Verdichterabschnitt (105) unter Umgehung der wenigstens einen Brennkammer (110) zum Turbinenabschnitt (108) erstreckt, wobei der zweite Kühlluftpfad im Verdichterabschnitt Luft aus dem Strömungspfad abzapft und als Kühlluft durch bzw. an Turbinenkomponenten im Turbinenabschnitt (108) und/oder im Brennkammerabschnitt hindurch oder entlang führt, wobei der erste Kühlluftpfad die Kühlluft nach dem Kühlen der vom ersten Kühlluftpfad zu kühlenden Gasturbinenkomponenten an einer Einspeisestelle (149, 156) als zu der aus dem Strömungspfad im Verdichterabschnitt abgezapften Luft des zweiten Kühlluftpfades zusätzliche Kühlluft in den zweiten Kühlluftpfad einspeist.

2. Gasturbinenanlage (100) nach Anspruch 1, in der die Einspeisestelle (149) im zweiten Kühlluftpfad in einem im Verdichterabschnitt (105) befindlichen Teil des zweiten Kühlluftpfades stromab der Abzapfstelle (148) des zweiten Kühlluftpfades angeordnet ist.

3. Gasturbinenanlage nach Anspruch 2, in der der erste Kühlluftpfad nacheinander durch einen Spalt (145) zwischen dem Rotor (103) und einer den Rotor im Brennkammerabschnitt (106) umgebenden Rotorabdeckung (144) und durch eine abschließende Leitschaufelreihe (146) des Verdichterabschnitts (105) hindurch zur Einspeisestelle (149) in den zweiten Kühlluftpfad führt.

4. Gasturbinenanlage (100) nach Anspruch 1, in der die Einspeisestelle (156) im zweiten Kühlluftpfad in einem im Turbinenabschnitt (108) befindlichen Teil des zweiten Kühlluftpfades stromauf der vom zweiten Kühlluftpfad zu kühlenden Gasturbinenkomponenten angeordnet ist.

5. Gasturbinenanlage (100) nach einem der Ansprüche 1 bis 4, in der eine Mehrzahl von Kühlluftpfaden vorhanden ist, wobei die Kühlluftpfade unterschiedliche Druckniveaus aufweisen und die Kühlluft nach dem Kühlen der zu kühlenden Gasturbinenkomponenten an entsprechenden Einspeisestellen jeweils in den Kühlluftpfad mit dem nächstniedrigeren Druckniveau einspeisen.

6. Gasturbinenanlage (100) nach einem der Ansprüche 1 bis 5, in der sich ein Kühlluftpfad durch die Leitschaufeln einer bestimmten Leitschaufelreihe der Turbine erstreckt und in einen anderen Kühlluftpfad mündet, der sich durch die Leitschaufeln einer im Strömungspfad stromab zu der bestimmten Laufschaufelreihe gelegenen weiteren Laufschaufelreihe erstreckt.

## Claims

1. Gas turbine unit (100) having a compressor section (105), a combustion chamber section (106) containing at least one combustion chamber (110), and a turbine section (108), wherein a flow path extends, proceeding from a compressor inlet, through the compressor section (105), at least one combustion chamber (110) of the combustion chamber section (106) and the turbine section (108) to a turbine outlet, and having at least one first and one second cooling air path which bypass the at least one combustion chamber (110), wherein the first cooling air path bleeds compressor air from the flow path upstream of the at least one combustion chamber (110), and wherein the cooling air paths guide compressor bleed air as cooling air through or along turbine components in the turbine section (108) and/or in the combustion chamber section, wherein the first cooling air path is at a higher pressure than the second cooling air path and, after cooling the gas turbine components to be cooled by the first cooling air path, feeds the cooling air into the second cooling air path at a feed-in point (149, 156), wherein the second cooling air path has a bleed point (148, 152, 159) in the compressor section (105) and extends from the compressor section (105), bypassing the at least one combustion chamber (110), to the turbine section (108), wherein in the compressor section the second cooling air path bleeds air from the flow path and guides this as cooling air through or along turbine components in the turbine section (108) and/or in the combustion chamber section, wherein, at a feed-in point (149, 156), the first cooling air path, after cooling the gas turbine components to be cooled by the first cooling air path, feeds the cooling air into the second cooling air path as cooling air in addition to the air of the second cooling air path bled in the compressor section from the flow path.

2. Gas turbine unit (100) according to Claim 1, in which the feed-in point (149) in the second cooling air path is arranged in a part of the second cooling air path located in the compressor section (105), downstream of the bleed point (148) of the second cooling air path.

3. Gas turbine unit according to Claim 2, in which the first cooling air path leads in sequence through a gap (145) between the rotor (103) and a rotor shroud (144) surrounding the rotor in the combustion chamber section (106), and through a final guide vane row (146) of the compressor section (105), to the feed-in point (149) into the second cooling air path.

4. Gas turbine unit (100) according to Claim 1, in which the feed-in point (156) in the second cooling air path is arranged in a part of the second cooling air path located in the turbine section (108), upstream of the gas turbine components to be cooled by the second cooling air path.

5. Gas turbine unit (100) according to one of Claims 1 to 4, in which there are a plurality of cooling air paths, wherein the cooling air paths are at different pressures and, after cooling the gas turbine components to be cooled, feed, at corresponding feed-in points, the cooling air into that cooling air path having in each case the next-highest pressure.

6. Gas turbine unit (100) according to one of Claims 1 to 5, in which a cooling air path extends through the guide vanes of a certain guide vane row of the turbine, and opens into another cooling air path which extends through the guide vanes of another guide vane row downstream of the guide vane row in question.

## Revendications

1. Installation (100) de turbine à gaz, comprenant une partie (105) de compresseur, une partie (106) de chambre de combustion comportant au moins une chambre de combustion (110) et une partie (108) de turbine, dans laquelle un trajet d'écoulement s'étend, en partant d'une entrée du compresseur, en passant par la partie (105) de compresseur, par au moins une chambre de combustion (110) de la partie (106) de chambre de combustion et par la partie (108) de turbine, jusqu'à une sortie de turbine et comprenant au moins un premier et un deuxième trajets d'air de refroidissement, qui contournent la au moins une chambre de combustion (110), le premier trajet d'air de refroidissement soutirant, en amont de la au moins une chambre de combustion (110), de l'air de compresseur du trajet d'écoulement, et dans laquelle les trajets d'air de refroidissement font passer de l'air de compresseur soutiré en tant qu'air de refroidissement dans ou le long d'éléments de la turbine de la partie (108) de turbine et/ou de la partie de chambre de combustion, le premier trajet d'air de refroidissement ayant un niveau de pression plus haut que le deuxième trajet d'air de refroidissement et l'air de refroidissement étant, après le refroidissement des éléments de la turbine à gaz à refroidir par le premier trajet d'air de refroidissement, injecté en un point (149, 156) d'injection dans le deuxième trajet d'air de refroidissement, le deuxième trajet d'air de refroidissement ayant un point (148, 152, 159) de soutirage dans la partie (105) de compresseur et s'étendant de la partie (105) de compresseur, en contournant la au moins une chambre de combustion (110), à la partie (108) de turbine, le deuxième trajet d'air de refroidissement soutirant, dans la partie de compresseur, de l'air du trajet d'écoulement et le faisant passer, en tant qu'air de refroidissement, dans ou le long d'éléments de turbine de la partie (108) de turbine et/ou de la partie de chambre de combustion, le premier trajet d'air de refroidissement injectant l'air de refroidissement, après le refroidissement des éléments de turbine à gaz à refroidir par le premier trajet de refroidissement, dans le deuxième trajet d'air de refroidissement, en un point (149, 156) d'injection, en tant qu'air supplémentaire à l'air, soutiré du trajet d'écoulement dans la partie de compresseur, du deuxième trajet d'air de refroidissement.

2. Installation (100) de turbine à gaz suivant la revendication 1, dans laquelle le point (149) d'injection dans le deuxième trajet d'air de refroidissement est disposé dans une partie, se trouvant dans la partie (105) de compresseur, du deuxième trajet d'air de refroidissement en aval du point (148) de soutirage du deuxième trajet d'air de refroidissement.

3. Installation de turbine à gaz suivant la revendication 2, dans laquelle le premier trajet d'air de refroidissement mène au point (149) d'injection dans le deuxième trajet d'air de refroidissement, en passant par un intervalle (145) entre le rotor (103) et un recouvrement (144) du rotor, entourant le rotor dans la partie (106) de chambre de combustion, et par une rangée (146) d'aubes directrices finales de la partie (105) de compresseur.

4. Installation (100) de turbine à gaz suivant la revendication 1, dans laquelle le point (156) d'injection dans le deuxième trajet d'air de refroidissement est disposé dans une partie, se trouvant dans la partie (108) de turbine, du deuxième trajet d'air de refroidissement en amont des éléments de turbine à gaz à refroidir par le deuxième trajet d'air de refroidissement.

5. Installation (100) de turbine à gaz suivant l'une des revendications 1 à 4, dans laquelle il y a une pluralité de trajets d'air de refroidissement, dans laquelle les trajets d'air de refroidissement ont des niveaux de pression différents et l'air de refroidissement est, après le refroidissement des éléments de turbine à gaz à refroidir, injecté en des points d'injection correspondants, respectivement dans le trajet d'air de refroidissement ayant le niveau de pression immédiatement le plus bas.

6. Installation (100) de turbine à gaz suivant l'une des revendications 1 à 5, dans laquelle un trajet pour de l'air de refroidissement s'étend dans les aubes directrices d'une rangée d'aubes directrices déterminée de la turbine et débouche dans un autre trajet d'air de refroidissement, qui s'étend dans les aubes directrices d'une autre rangée d'aubes directrices disposée dans le trajet d'écoulement, en aval de la range d'aubes directrices déterminée.
